# EUROPÄISCHE PATENTANMELDUNG

(11) **EP 4 723 434 A1**
(43) Veröffentlichungstag der Anmeldung: **08.04.2026**
(21) Anmeldenummer: 24204014.5
(22) Anmeldetag: 01.10.2024
(51) Int. Cl.: H02K 1/2795, H02K 3/26, H02K 3/47, H02K 21/24

(54) **SCHEIBENLÄUFERMASCHINE**

(71) Anmelder: Fledrich, Stefan, 73207 Plochingen (DE)
(72) Erfinder: Fledrich, Stefan, 73207 Plochingen (DE); Latorcai, János, 1021 Budapest (HU); Laczó, Sándor, 2890 Tata (HU); Molnár, György, 1124 Budapest (HU)
(74) Vertreter: Christ, Niko

(57) **Zusammenfassung**

In vielen Anwendungsbereichen ist ein laufruhiger Betrieb von Elektromotoren von hohem Interesse. Dabei handelt es sich insbesondere um verschleißarme Drehungen, die die Lebensdauer der Komponenten erhöht. Eine zusätzliche Verbesserung bei Scheibenläufermaschinen wird ermöglicht, indem die Statorscheiben mit derart ausgeformten und leicht magnetisierbaren Materialien versehen sind, dass sie sich durch eine enorm kleine Induktivität auszeichnen. Eine kleine Induktivität ermöglicht eine beliebig modulare Ansteuerung, wodurch nicht nur ein sehr effizienter, sondern auch sehr präziser Betrieb einer Scheibenläufermaschine ermöglicht wird.

## Beschreibung

Die vorliegende Erfindung betrifft eine Scheibenläufermaschine umfassend zwei gegeneinander verdrehbare Scheibenpakete mit Wirkelementen, mit wenigstens einer Scheibe eines ersten Scheibenpakets, das konzentrisch flächenparallel neben wenigstens einer Scheibe eines zweiten Scheibenpakets angeordnet ist, wobei jeder der Scheiben wenigstens zwei Wirkelemente zugeordnet sind, welche eine gegenseitige Anziehung und/oder Abstoßung bewirken können, wobei die Scheiben des ersten Scheibenpakets abwechselnd mit den Scheiben des zweiten Scheibenpakets zu einem Scheibenstapel geschichtet sind.

Eine solche Scheibenläufermaschine ist bereits vorbekannt aus der EP 1 145 410 B1. Scheibenläufermaschinen umfassen einen Stator mit einem Spulenträger, der Spulen aus einem weichmagnetischen Material aufnimmt. Dies ist insbesondere bei Asynchronmotoren so sinnvoll, weil ein Einsatz von Schleifkontakten hierdurch entfallen kann, prinzipiell ist aber auch eine Konstruktion möglich, bei der die Wicklungen auf dem Rotor angebracht sind. Im gezeigten Fall ist der Stator von einem an einer Rotorachse befindlichen Rotor weitgehend umschlossen. An dem Rotor sind Rotorscheiben angeordnet, die mit Permanentmagneten versehen sind. Die Rotorachse ist über Kugellager in einem Statorflansch befestigt. Durch fortwährendes Umschalten der Stromrichtung der Spulen während des Umlaufs der Magnetscheiben wird eine kontinuierliche Drehung des Rotors erreicht.

Für ein möglichst langlebiges Produkt sind hohe Laufruhen, insbesondere bei großem Drehmoment, entscheidend. Dies wurde im Stand der Technik erreicht, indem mehrere Statorscheiben kugelgelagert verbaut wurden, wobei die jeweiligen Statorscheiben lediglich einen geschlossenen Ring oder ein Ringsegment aus wechmagnetischem Material aufweisen. Die Breite des Ringes oder des Ringsegmentes definiert die Stärke der magnetischen Vorspannung ohne Änderung der Dimensionen der Maschine Motors, so dass eine Anpassung an die Geometrie der Rotorscheibe sowie der verwendeten Lagerung möglich ist. Unnötig große Lagerbelastungen werden somit vermieden, wodurch die Lebensdauer der Maschine Motors deutlich erhöht werden kann. Im Stand der Technik wurden dabei die Geometrie der auf den Statorscheiben befindlichen Spulen konzentrisch gewählt, sodass die Spulen in einem gedachten Querschnitt der Maschine deckungsgleich mit den Permanentmagneten liegen.

Für eine solche Realisierung muss eine Spule aus vielen Wicklungen weichmagnetischen Materials bestehen, wodurch ihre Induktivität steigt. Mit steigender Induktivität einer Spule sinkt jedoch die höchstmögliche Frequenz, in der die Spule gegen die Wirkung ihres Blindwiderstands betrieben werden kann. Insbesondere bei einer Scheibenläufermaschine kann dies problematisch werden, da eine Ansteuerung notwendig ist, welche die Versorgungsspannung der Spulen permanent variiert. Die Ansteuerung erfolgt über eine Addition einer Vielzahl einzelner Sinuskurven unterschiedlicher Frequenz und Phase. Ist die Induktivität einer Spule zu hoch, so kann es vorkommen, dass die Spule wie ein Tiefpassfilter hohe Frequenzen des Eingangssignals herausfiltert, wodurch das ursprüngliche Signal verändert wird, was den Betrieb der Scheibenläufermaschine beeinträchtigen und zu einer geringeren Lebensdauer führen kann.

Vor diesem Hintergrund liegt der vorliegenden Erfindung die Aufgabe zugrunde, eine Scheibenläufermaschine zu schaffen, dessen Leiterabschnitte mit einer möglichst kleinen Induktivität ein möglichst großes Drehmoment erzeugen und dabei präzise ansteuerbar sind.

Dies gelingt durch eine Scheibenläufermaschine gemäß den Merkmalen des unabhängigen Anspruchs 1. Sinnvolle Ausgestaltungen einer solchen Maschine können den sich anschließenden abhängigen Ansprüchen entnommen werden.

Vorgesehen ist insoweit eine Scheibenläufermaschine umfassend zwei gegeneinander verdrehbare Scheibenpakete mit Wirkelementen, mit wenigstens einer Scheibe eines ersten Scheibenpakets, das konzentrisch flächenparallel neben wenigstens einer Scheibe eines zweiten Scheibenpakets angeordnet ist, wobei jeder der Scheiben wenigstens zwei Wirkelemente zugeordnet sind, welche eine gegenseitige Anziehung und/oder Abstoßung bewirken können, wobei die Scheiben des ersten Scheibenpakets abwechselnd mit den Scheiben des zweiten Scheibenpakets zu einem Scheibenstapel geschichtet sind. Erfindungsgemäß ist eine solche Scheibenläufermaschine dadurch gekennzeichnet, dass erste Wirkelemente an Scheiben des ersten Scheibenpakets als längliche Permanentmagnete ausgestaltet sind, welche auf ein Drehzentrum ausgerichtet sind und dass zweite Wirkelemente an Scheiben des zweiten Scheibenpakets als Leiterabschnitte ausgestaltet sind, welche in einer Deckungsposition deckungsgleich mit den Permanentmagneten an den Scheiben des ersten Scheibenpakets ausgerichtet sind, wobei jeweils zwei Leiterabschnitte an ihrem dem Drehzentrum zugewandten Ende elektrisch leitend miteinander zu einem Leitersegment verbunden sind und jedes Leitersegment zumindest mittelbar mit einem Kontaktpaar elektrisch verbunden ist.

Bei der Verwendung als Stepper-Motor kann eine solche Scheibenläufermaschine ein hohes Maß an zuverlässiger, in Bezug auf die Positionierung hysteresefreier Präzision selbst bei den kleinsten Größenordnungen liefern, während Totbereiche innerhalb der Scheibenläufermaschine minimiert werden. Zudem können durch eine solche Maschine gebildete Steppermotoren durch einen beliebig langen Scheibenstapel ein beliebig skalierbares Drehmoment liefern, während sie gleichzeitig auf kleinsten Größenskalen präzise steuerbar sind.

Auch bei der Verwendung solcher Scheibenläufermaschinen in der Automobilindustie oder im Flugverkehr kann eine hohe Drehzahl mit hohem Drehmoment gemäß den je nach Bedarf vorliegenden Anforderdungen realisiert werden. Die vorliegende Erfindung kann an alle vorherrschenden Bedingungen anpassbare Antriebe gewährleisten. Gleichzeitig können die Scheibenläufermaschinen ein hohes Maß an Effizienz aufweisen, wodurch die Reichweite eines Fahrzeugs oder eines Flugzeugs erheblich erhöht werden kann.

Bevorzugtermaßen kann vorgesehen sein, dass es sich bei dem ersten Scheibenpaket um einen Stator und bei den Scheiben des ersten Scheibenpakets um Statorscheiben handelt und dass es sich bei dem zweiten Scheibenpaket um einen Rotor und bei den Scheiben des zweiten Scheibenpakets um Rotorscheiben handelt. Es kann auch vorgesehen sein, dass dem Rotor ein Kommutator mit Schleifkontakten zugeordnet ist. Dies ist dann sinnvoll, wenn die Permanentmagneten stationär angeordnet sind, wodurch der Aufbau der Scheibenläufermaschine ansatzweise dem eines konventionellen Motors oder Generators nahe kommt. Bei einem Verleich oder einer Analyse von bestimmten Parametern der Scheibenläufermaschine im Hinblick auf einen konventionellen Motor oder Generator kann eine solche Vorrichtung vorteilhaft sein. Darüber hinaus ist in einem solchen Fall keine komplizierte Ansteuerung notwenig, es bedarf hierzu lediglich einer Gleichstromquelle. Grundsätzlich kann dadurch auch ein einfacher Aufbau und ein übersichtlicher Zusammenbau einer Scheibenläufermaschine gewährleistet werden, wodurch der Durchsatz der Scheibenläufermaschine in der Produktion erhöht wird.

Vorzugsweise kann es sich aber auch bei dem ersten Scheibenpaket um einen Rotor und bei den Scheiben des ersten Scheibenpakets um Rotorscheiben handeln und bei dem zweiten Scheibenpaket um einen Stator und bei den Scheiben des zweiten Scheibenpakets um Statorscheiben handeln. Aufgrund dieser Einschränkung können Schleifkontakte wie oben beschrieben vermieden werden, die insbesondere bei hohen Drehzahlen des Motors oder Generators schneller verschleißen können. Sie werden durch eine externe Ansteuerung ersetzt, die haltbarer und flexibler an die jeweiligen Umgebungsbedingungen anpassbar ist.

In einer konkreten Ausgestaltung erscheint es sinnvoll, wenn die Leitersegmente der Scheiben des zweiten Scheibenpakets mit einer Stromquelle verbunden sind, wobei die Stromquelle von einer Motorsteuerung angesteuert ist und wenigstens ein Netzteil und wenigstens einen Frequenzgenerator umfasst. Grundsätzlich wird für den Betrieb jedes Elektromotors eine Versorgungseinheit benötigt. Hier ist es nun so, dass ein beliebiges Magnetfeld in die Leitersegmente induziert werden kann, das sich darüber hinaus beliebig anpassen lässt. Diese Voraussetzungen bedingen eine Versorgungseinheit, die solche Signale liefern kann. Hierdurch kann die Leistung der Scheibenläufermaschine optimiert und gleichzeitig den Stromverbrauch reduziert werden.

In einer weiteren Ausgestaltung kann der Motorsteuerung wenigstens ein Positionsgeber zugeordnet sein, welcher eine gegenseitige Verdrehposition zwischen dem ersten Scheibenpaket und dem zweiten Scheibenpaket erfasst und der Motorsteuerung als Signal bereitstellt. Ein solcher Positionsgeber kann Informationen an die Versorgungseinheit zur genauen Positionserfassung liefern, wodurch die Versorgungseinheit präziser die Umgebungsparameter erfassen und auf diese rechtzeitig reagieren kann, um ein optimales Magnetfeld induzieren zu können und damit einhergehend ein optimiertes Drehmoment der Scheibenläufermaschine bereitstellt.

Ergänzend erscheint es vorteilhaft, wenn mehrere Scheiben des ersten Scheibenpakets sowie mehrere Scheiben des zweiten Scheibenpakets jeweils drehfest miteinander verbunden sind. Dadurch können Leistungseinbußen minimiert werden, zudem wird ein unverzögerter Start beziehungsweise Stillstand des Motors zu jedem Zeitpunkt ermöglicht. Dies ermöglicht insbesondere die Verwendung der Scheibenläufermaschine als hochpräzisen Stepper-Motor.

In einer konkreten Ausgestaltung können die ersten Wirkelemente auf den Scheiben des ersten Scheibenpakets zueinander deckungsgleich angeordnet sein oder die zweiten Wirkelemente auf den Scheiben des zweiten Scheibenpakets zueinander deckungsgleich angeordnet sein, wobei die jeweils nicht zueinander deckungsgleich angeordneten Wirkelemente in aufeinander folgenden Scheiben zueinander maximal um einen Winkel versetzt sind, der dem halben Versatz zweier benachbarter Leitersegmente auf einer Scheibe entspricht, wobei vorzugsweise der Winkel so gewählt ist, dass ein ganzzahliges Vielfaches des Winkels dem vollen Versatz zweier benachbarter Leitersegmente auf einer Scheibe entspricht. Dies führt dazu, dass ein maximales Drehmoment sowie eine maximale Drehzahl des Motors gewährleistet werden kann, da ein solcher Versatz möglichst wenig Totpunkte der Scheibenläufermaschine erzeugt. Eine solche Anbringung ermöglicht es dem Rotor zudem, direkt auf das induzierte Magnetfeld zu reagieren, was zu einer minimierten Versorgungsleistung führen kann.

Vorzugsweise können mehrere Leitersegmente auf einer Scheibe des zweiten Scheibenpakets miteinander verbunden und in Reihe zusammengeschaltet sein. Somit kann die Anzahl der Kontakte pro Scheibe minimiert werden, wodurch ein kostengünstiger Aufbau gewährleistet werden kann. In Spezialfällen kann es auch vorteilhaft sein, mehrere Kontaktpaare pro Scheibe anzubringen, um das sich auf der Scheibe bildende Magnetfeld präziser einstellen zu können.

In einer weiteren Ausgestaltung können mehrere Leitersegmente auf einer Scheibe des zweiten Scheibenpakets in mehreren Ebenen verlegt sein. Dies hat den Effekt, dass das resultierende Magnetfeld einer einzelnen Scheibe erhöht wird, wodurch die Anziehungskraft auf die Permanentmagneten erhöht wird. Dies führt zu einem höheren Drehmoment der Scheibenläufermaschine. Je nach Anwendungsgebiet können auch mehrere Scheiben mit einer einzigen Ebene an Leitersegmenten auf der Scheibe anstatt mehrerer Ebenen an Leitersegmenten auf einer Scheibe vorgesehen sein.

Zudem kann vorgesehen sein, dass Leitersegmente auf einer Scheibe des zweiten Scheibenpakets bandförmig ausgeformt sind. Grundsätzlich wird von einem betriebenen Elektromotors häufig ein hohes Drehmoment gefordert, was bisher durch ein starkes Magnetfeld bewirkt wurde. Ein starkes Magnetfeld wird entweder durch eine hohe Stromstärke oder durch eine hohe Windungszahl eines Leiters bestimmt. Da der bandförmige Verlauf eine niedrige Windungszahl und damit eine niedrige Induktivität aufweist, ist die Magnetfeldstärke minimal. Die manifestiert sich in einem niedrigeren Drehmoment der einzelnen Scheibe, das jedoch durch die Verwendung mehrerer Scheiben kompensiert werden kann. Eine solche Anordnung hat den Vorteil, dass ein präziser Betrieb der Scheibenläufermaschines gewährleistet werden kann, da eine Vielzahl an Frequenzen mit hohen Bandbreiten angelegt werden kann, die einen Einfluss auf die Scheibenläufermaschine haben und nicht durch den entstehenden Tiefpassfilter eines Leiters mit hoher Windungszahl herausgefiltert werden.

Weiterhin erscheint es sinnvoll, wenn der Scheibenstapel beidseitig von endständigen magnetischen Abschirmelementen flankiert ist. Dadurch werden magnetische Streueffekte innerhalb des Motorraums minimiert. Insbesondere die Ansteuerung kann von den Magnetfeldern komplett unbeeinflusst direkt neben dem Motor angeordnet werden.

Die vorstehend beschriebene Erfindung wird im Folgenden anhand eines Ausführungsbeispiels näher erläutert.

Es zeigen
- Figur 1: eine gehäuselose Scheibenläufermaschine in einer perspektivischen Darstellung,
- Figur 2: eine schematische Explosionsdarstellung mehrerer abwechselnd geschichteter Statorscheiben und Rotorscheiben der Scheibenläufermaschine gemäß Figur 1,
- Figur 3: eine schematische Darstellung einer möglichen Geometrie von Leitersegmenten mit jeweils zwei Kontakten in einer kleeblattartigen Form mit vier Einzelsegmenten, sowie
- Figur 4: eine schematische Darstellung der Leitersegmente gemäß Figur 3 mit durchgehend verbundenen Leitersegmenten und insgesamt zwei Kontakten.

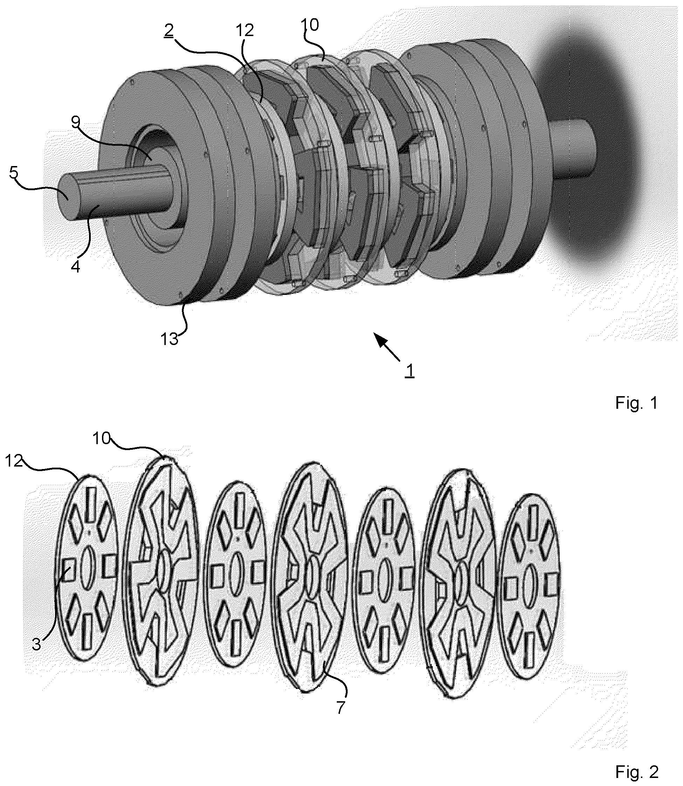

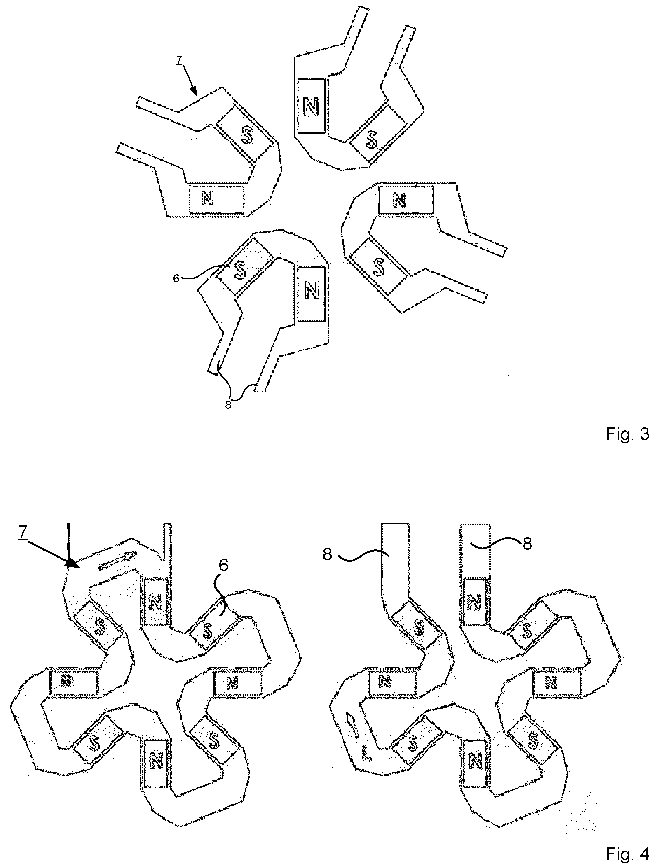

Figur 1 zeigt eine perspektivische Darstellung einer Scheibenläufermaschine 1 ohne das umgebende Gehäuse in einer Schrägansicht. Die Scheibenläufermaschine 1 umfasst einen Rotor 4 und einen Stator 9, wobei der Rotor 4 aus mehreren Rotorscheiben 12 und der Stator 9 aus mehreren Statorscheiben 10 gebildet sind. Rotor 4 und Stator 9 bilden zusammen einen Scheibenstapel 2 aus, wobei die Rotorscheiben 12 des Rotors 4 um ein Drehzentrum 5 drehbar gelagert sind und die Scheiben des Stators 9 unbeweglich bleiben. Die Scheibenläufermaschine kann sowohl als Motor als auch als Generator betrieben werden. Auf jeder Statorscheibe 10 ist wenigstens ein Leitersegment 7 in einer kleeblattartigen Geometrie angebracht. Den Rotorscheiben 12 sind Permanentmagnete 3 zugeordnet. Die Permanentmagnete 3 unterschiedlicher Rotorscheiben 12 sind zueinander deckungsgleich angeordnet, die Leitersegmente 7 unterschiedlicher Statorscheiben zueinander versetzt. Die Leitersegmente 7 sind aus jeweils wenigstens zwei Leiterabschnitten 6 gebildet, in welchen ein magnetisches Feld induziert werden kann. Innerhalb einer Statorscheibe 10 sind die Leiterabschnitte 6 zueinander in einem entsprechenden Winkel und Abstand angeordnet wie die Permanentmagnete 3 einer Rotorscheibe 12. In Figur 1, 2 und 4 sind Leiterabschnitte 6 jeweils zu einer durchgehenden, vierblättrigen Kleeblattgeometrie verbunden, während in Figur 3 einzelne Kleeblattsegmente dargestellt werden. Jedem Leitersegment 7 ist ein Kontaktpaar 8 zugeordnet, wie in Figur 3 jedem einzelnen Segment ein Kontaktpaar 8 oder in Figur 4 der gesamten Wicklung ein Kontaktpaar 8. Endständig beiderseits des Scheibenstapels 2 befinden sich magnetische Abschirmelemente 13 zur Verringerung streuender Magnetkreise. Werden die auf den Statorscheiben 10 angebrachten Leitersegmente 7 mit einer hier nicht eingezeichneten Versorgungseinheit in elektrisch leitfähigen Kontakt gebracht, wird von den Leiterabschnitten 6 aus ein Magnetfeld induziert. Dieses Magnetfeld übt eine Anziehungskraft beziehungsweise Abstoßungskraft auf die Permanentmagneten 3 aus, wodurch ein Drehmoment entsteht, welches von den Permanentmagneten 3 ausgehend über die Rotorscheiben 12 auf den Rotor 4 übertragen wird. Um die Bewegung der Rotorscheiben 12 aufrecht zu erhalten, wird ein variierendes Magnetfeld durch Versorgung der Leitersegmente 7 mit einer zeitlich modulierbaren Strom- und Spannungsversorgung erzeugt.

Die Erfindung ist nicht auf die anhand der Zeichnung dargestellten Ausführungsform beschränkt. Beispielsweise kann auch nur eine Statorscheibe 10 von zwei Rotorscheiben 12 umgeben sein, oder umgekehrt nur eine Rotorscheibe 12 von zwei Statorscheiben 10 umgeben sein. Es können auch wesentlich mehr Statorscheiben 10 und Rotorscheiben 12 abwechselnd angeordnet sein und einen völlig anderen Scheibenstapel 2 bilden, als hier exemplarisch dargestellt ist.

Figur 2 zeigt schematisch eine Anordnung mehrerer Rotorscheiben 12 und Statorscheiben 10 ohne die sie verbindenden, durch das Drehzentrum 5 verlaufenden Achsen. Jeder Rotorscheibe 12 ist dieselbe Anzahl an Permanentmagneten 3 zugeordnet. Jede Statorscheibe 10 ist mit einem gleichartig geformten Leitersegment 7 in derselben kleeblattartigen Geometrie versehen. Die Statorscheibe 10 und die Rotorscheibe 12 sind aus einem nicht magnetischen Material gefertigt, um magnetische Streuungen und deren etwaigen Einwirkungen auf die Effizienz der Scheibenläufermaschine 1 entgegenzuwirken.

Figur 3 zeigt eine schematische Darstellung der Geometrie meherer Leitersegmente 7 mit einem Kontaktpaar 8 pro kleeblattartigem Leitersegment 7, durch die eine elektrisch leitfähige Verbindung zur hier nicht eingezeichneten Versorgungseinheit hergestellt wird. Dadurch bilden sich in jedem Leitersegment 7 unterschiedlich Nord- und Südpole entlang der Leiterabschnitte 6 aus, da jedes Leitersegment 7 auch individuell angesteuert werden kann. Die unterschiedlich stark ausgeprägten Nord- und Südpole bilden in der dargestellten Kombination ein beliebig variabel erzeugbares Magnetfeld, wodurch das Drehmoment der Scheibenläufermaschine optimal an jede Gegebenheit anpassbar ist.

Figur 4 zeigt eine weitere mögliche Geometrie, in welcher das Leitersegment 7 auf der Statorscheibe 10 angebracht werden kann. Anstatt mehrere Leitersegmente 7 einzeln anzusteuern, kann auch eine zusammenhängende Geometrie auf der Statorscheibe 10 angebracht und über ein Kontaktpaar 8 mit der hier nicht gezeigten Versorgungseinheit in leitfähigem Kontakt sein. Die hier dargestellte, an ein Kleeblatt erinnernde Geometrie des Leitersegments 7 kann auch andersartig verlaufend auf der Statorscheibe 10 angebracht sein. Die kleeblattartige Ausgestaltung eignet sich jedoch besonders dazu, eine optimale Abdeckung mit den Permanentmagneten 3 zu erzeugen. Es können mehrere Leitersegmente 7 oder eine komplette Geometrie für die Ansteuerung vorgesehen sein.

Vorstehend beschrieben ist somit eine Scheibenläufermaschine, dessen Leiterabschnitte mit einer möglichst kleinen Induktivität ein möglichst großes Drehmoment erzeugen und dabei präzise ansteuerbar sind.

### BEZUGSZEICHENLISTE

- 1: Scheibenläufermaschine
- 2: Scheibenstapel
- 3: Permanentmagnet
- 4: Rotor
- 5: Drehzentrum
- 6: Leiterabschnitt
- 7: Leitersegment
- 8: Kontaktpaar
- 9: Stator
- 10: Statorscheiben
- 12: Rotorscheiben
- 13: Abschirmelemente

## Patentansprüche

1. Scheibenläufermaschine umfassend zwei gegeneinander verdrehbare Scheibenpakete mit Wirkelementen, mit wenigstens einer Scheibe eines ersten Scheibenpakets, das konzentrisch flächenparallel neben wenigstens einer Scheibe eines zweiten Scheibenpakets angeordnet ist, wobei jeder der Scheiben wenigstens zwei Wirkelemente zugeordnet sind, welche eine gegenseitige Anziehung und/oder Abstoßung bewirken können, wobei die Scheiben des ersten Scheibenpakets abwechselnd mit den Scheiben des zweiten Scheibenpakets zu einem Scheibenstapel (2) geschichtet sind,
**dadurch gekennzeichnet, dass** erste Wirkelemente an Scheiben des ersten Scheibenpakets als längliche Permanentmagnete (3) ausgestaltet sind, welche auf ein Drehzentrum (5) ausgerichtet sind und dass zweite Wirkelemente an Scheiben des zweiten Scheibenpakets (4) als Leiterabschnitte (6) ausgestaltet sind, welche in einer Deckungsposition deckungsgleich mit den Permanentmagneten (3) an den Scheibe des ersten Scheibenpakets ausgerichtet sind, wobei jeweils zwei Leiterabschnitte (6) an ihrem dem Drehzentrum (5) zugewandten Ende elektrisch leitend miteinander zu einem Leitersegment (7) verbunden sind und jedes Leitersegment (7) zumindest mittelbar mit einem Kontaktpaar (8) elektrisch verbunden ist.

2. Scheibenläufermaschine gemäß Anspruch 1, **dadurch gekennzeichnet, dass** es sich bei dem ersten Scheibenpaket um einen Stator (9) und bei den Scheiben des ersten Scheibenpakets um Statorscheiben (10) handelt und dass es sich bei dem zweiten Scheibenpaket um einen Rotor (4) und bei den Scheiben des zweiten Scheibenpakets um Rotorscheiben (12) handelt.

3. Scheibenläufermaschine gemäß Anspruch 2, **dadurch gekennzeichnet, dass** dem Rotor (4) ein Kommutator mit Schleifkontakten zugeordnet ist.

4. Scheibenläufermaschine gemäß Anspruch 1, **dadurch gekennzeichnet, dass** es sich bei dem ersten Scheibenpaket um einen Rotor (4) und bei den Scheiben des ersten Scheibenpakets um Rotorscheiben (12) handelt und dass es sich bei dem zweiten Scheibenpaket um einen Stator (9) und bei den Scheiben des zweiten Scheibenpakets um Statorscheiben (10) handelt.

5. Scheibenläufermaschine gemäß Anspruch 4, **dadurch gekennzeichnet, dass** die Leitersegmente (7) der Scheiben des zweiten Scheibenpakets mit einer Stromquelle verbunden ist, wobei die Stromquelle von einer Motorsteuerung angesteuert ist und wenigstens ein Netzteil und wenigstens einen Frequenzgenerator umfasst.

6. Scheibenläufermaschine gemäß Anspruch 5, **dadurch gekennzeichnet, dass** der Motorsteuerung wenigstens ein Positionsgeber zugeordnet ist, welcher eine gegenseitige Verdrehposition zwischen dem ersten Scheibenpaket und dem zweiten Scheibenpaket erfasst und der Motorsteuerung als Signal bereitstellt.

7. Scheibenläufermaschine gemäß einem der vorhergehenden Ansprüche, **dadurch gekennzeichnet, dass** mehrere Scheiben des ersten Scheibenpakets sowie mehrere Scheiben des zweiten Scheibenpakets jeweils drehfest miteinander verbunden sind.

8. Scheibenläufermaschine gemäß einem der vorhergehenden Ansprüche, **dadurch gekennzeichnet, dass** die ersten Wirkelemente auf den Scheiben des ersten Scheibenpakets zueinander deckungsgleich angeordnet sind oder die zweiten Wirkelemente auf den Scheiben des zweiten Scheibenpakets zueinander deckungsgleich angeordnet sind, wobei die jeweils nicht zueinander deckungsgleich angeordneten Wirkelemente in aufeinander folgenden Scheiben zueinander maximal um einen Winkel versetzt ist, der dem halben Versatz zweier benachbarter Leitersegmente (7) auf einer Scheibe entspricht, wobei vorzugsweise der Winkel so gewählt ist, dass ein ganzzahliges Vielfaches des Winkels dem vollen Versatz zweier benachbarter Leitersegmente (7) auf einer Scheibe entspricht.

9. Scheibenläufermaschine gemäß einem der vorhergehenden Ansprüche, **dadurch gekennzeichnet, dass** mehrere Leitersegmente (7) auf einer Scheibe des zweiten Scheibenpakets miteinander verbunden und in Reihe zusammengeschaltet sind.

10. Scheibenläufermaschine gemäß einem der vorhergehenden Ansprüche, **dadurch gekennzeichnet, dass** mehrere Leitersegmente (7) auf einer Scheibe des zweiten Scheibenpakets in mehreren Ebenen verlegt sein können.

11. Scheibenläufermaschine gemäß einem der vorhergehenden Ansprüche, **dadurch gekennzeichnet, dass** Leitersegmente (7) auf einer Scheibe des zweiten Scheibenpakets bandförmig ausgeformt sind.

12. Scheibenläufermaschine gemäß einem der vorhergehenden Ansprüche, **dadurch gekennzeichnet, dass** der Scheibenstapel (2) beidseitig von endständigen magnetischen Abschirmelementen (13) flankiert ist.
